# EUROPEAN PATENT APPLICATION

(11) **EP 4 726 856 A1**
(43) Date of publication of application: **15.04.2026**
(21) Application number: 24868516.6
(22) Date of filing: 28.08.2024
(51) Int. Cl.: H01M 10/44, H01M 4/505, H01M 4/04, H01M 10/058, H01M 10/052, H01M 4/02

(54) **METHOD FOR MANUFACTURING LITHIUM SECONDARY BATTERY**

(30) Priority: 18.09.2023 KR 20230124358
(71) Applicant: LG Energy Solution, Ltd., Seoul 07335 (KR)
(72) Inventor: HAN, Myoung Hun, Daejeon 34122 (KR); SUNG, Kiwon, Daejeon 34122 (KR); KANG, Bohyun, Daejeon 34122 (KR); JANG, Daeun, Daejeon 34122 (KR); KIM, Jeongmin, Daejeon 34122 (KR)
(74) Representative: Hoffmann Eitle
(86) International application number: PCT/KR2024/012905
(87) International publication number: WO 2025/063537

(57) **Abstract**

The present disclosure relates to a manufacturing method of a lithium secondary battery comprising: a step (S1) of manufacturing a preliminary cell which comprises a positive electrode containing a positive electrode active material, a negative electrode, a separator and an electrolyte; and a step (S2) of charging the preliminary cell to a charging cut-off voltage and discharging the preliminary cell to the discharging cut-off voltage to activate the preliminary cell, wherein the positive electrode active material includes a lithium-rich manganese-based oxide containing 50 mol% or more of manganese(Mn) among all metals excluding lithium, and having a molar ratio of lithium to all metals excluding lithium (Li/Me) exceeding 1, and wherein the charging cut-off voltage is more than 4.3V, and the discharging cut-off voltage is 2.6V or more.

## Description

### [TECHNICAL FIELD]

### Cross-Reference to Related Application(s)

This application claims priority to and the benefit of Korean Patent Application No. 10-2023-0124358, filed on September 18, 2023, with the Korean Intellectual Property Office, the disclosure of which is incorporated herein by reference in its entirety.

The present disclosure relates to a manufacturing method of a lithium secondary battery, and more particularly, a manufacturing method of a lithium secondary battery that can reduce the amount of gas generated in the activation process of a battery comprising a lithium-rich manganese-based oxide and achieve excellent capacity characteristics and resistance characteristics.

### [BACKGROUND]

Lithium secondary batteries are energy storage media that have been applied in various fields since they were commercially introduced in 1991. As the market for products equipped with lithium secondary batteries expands, research to increase the energy density of lithium secondary batteries has been actively conducted. One of the methods that is attracting the most attention is developing a positive electrode active material with a composition that can utilize a larger amount of lithium than before.

As a positive electrode active material that can utilize a larger amount of lithium, lithium-rich transition metal oxide having a layered structure and having a molar ratio of lithium to transition metal of more than 1 have been developed. Since such a lithium-rich transition metal oxide achieves capacity by utilizing not only the cation redox reaction of the transition metal but also the anion redox reaction using oxygen in the positive electrode structure, it is possible to exhibit higher capacity characteristics.

A lithium secondary battery applied with such a lithium-rich based transition metal oxide generally achieves high capacity by performing an activation process at a high voltage of 4.3V or more. However, in the process of such a high-voltage activation, oxygen desorption may occur, which may result in generation of excessive gas. Such gases can make it difficult to proceed with the activation process and can deteriorate the cell quality. In addition, there is a problem that oxygen desorption and cation mixing are induced in the crystal structure of lithium-rich based transition metal oxides, resulting in a significant increase in the resistance of the positive electrode. Furthermore, in the process of high-voltage activation, elution of transition metals such as manganese is generated, and the transition metals may be deposited on the negative electrode to cause deterioration of the negative electrode, thereby reducing the life characteristics of the secondary battery.

When the activation voltage is lowered, the amount of gas generated during the activation process can be reduced, but in this case, abnormal behavior may occur in which the capacity abnormally increases in a battery operation process, and problems such as additional gas generation may occur.

### [DETAILED DESCRIPTION OF THE INVENTION]

### [Technical Problem]

It is an object of the present disclosure to provide a manufacturing method of a lithium secondary battery that can reduce the amount of gas generated in the activation process of a lithium secondary battery comprising a lithium-rich manganese-based oxide and achieve excellent resistance characteristics and capacity characteristics.

### [Technical Solution]

According to an embodiment of the present disclosure, there is provided a manufacturing method of a lithium secondary battery comprising: a step (S1) of manufacturing a preliminary cell which comprises a positive electrode containing a positive electrode active material, a negative electrode, a separator and an electrolyte; and a step (S2) of charging the preliminary cell to a charging cut-off voltage and discharging the preliminary cell to the discharging cut-off voltage to activate the preliminary cell, wherein the positive electrode active material includes a lithium-rich manganese-based oxide containing 50 mol% or more of manganese(Mn) among all metals excluding lithium, and having a molar ratio of lithium to all metals excluding lithium (Li/Me) exceeding 1, and wherein the charging cut-off voltage is more than 4.3V, and the discharging cut-off voltage is 2.6V or more.

An average particle size(D₅₀) of the positive electrode active material may be 1.5µm to 13µm.

The positive electrode active material includes a first positive electrode active material and a second positive electrode active material having different average particle size(D₅₀), and the average particle size of the first positive electrode active material may be larger than the average particle size of the second positive electrode active material.

The average particle size(D₅₀) of the first positive electrode active material may be 6µm to 15µm.

The average particle size(D₅₀) of the second positive electrode active material may be 0.5µm to 6µm.

The lithium-rich manganese-based oxide may be represented by the following Chemical Formula 1.

[Chemical Formula 1] Liₓ₁Mn_{y1}M¹_{1-y1}O₂

wherein in Chemical Formula 1, 1<x1≤1.5 and 0.5≤y1≤1, and the M¹ is at least one element selected from the group consisting of Ni, Al, B, Co, W, Mg, V, Ti, Zn, Ga, In, Ru, Nb, Sn, Sr and Zr.

In the activating step, the charging may include a 1st charging performed at a C-rate of 0.04C to 0.5C and a 2nd charging performed at a C-rate of 0.3C to 1.2C.

The 1st charging may be performed until the SOC of the preliminary cell is between 1 and 10, and the 2nd charging is performed after the 1st charging until the SOC of the preliminary cell is between 80 and 100.

The 2nd charging may include a 2-1 charging performed at a C-rate of 0.8C to 1.2C and a 2-2 charging performed at a C-rate of 0.3C to 0.6C.

The 2-1 charging may be performed after the 1st charging until the SOC of the preliminary cell becomes between 40 and 80, and the 2-2 charging may be performed after the 2-1 charging until the SOC of the preliminary cell becomes between 80 and 100.

The 1st charging may be performed in a constant-current mode (CC mode).

The 2nd charging may be performed in a constant current-constant voltage mode, and the 2nd charging may be performed up to a charging cut-off current of 0.02C to 0.25C.

The discharging cut-off voltage may be 2.7V or more and 3.5V or less.

In the activating step, the discharging may be performed at a C-rate of 0.4C to 1.5C.

### [Advantageous Effects]

According to the present disclosure, when activating a lithium secondary battery containing a lithium-rich manganese-based oxide, a charging cut-off voltage and a discharging cut-off voltage are adjusted to a specific range, thereby minimizing cation mixing and oxygen desorption.

As a result, the positive electrode and cell resistance characteristics are improved, the amount of gas generated during the high-voltage activation process and the amount of manganese elution are minimized, and the activation time is reduced, thereby improving productivity. In addition, the lithium secondary battery manufactured by the method of the present disclosure is excellent in capacity characteristics, is suppressed in an increase of positive electrode resistance in a charge and discharge, and thus is excellent in resistance characteristics and life characteristics.

### [DETAILED DESCRIPTION OF THE EMBODIMENTS]

Hereinafter, embodiments of the present disclosure will be described in more detail.

Terms or words used in the present specification and claims should not be construed as limited to ordinary or dictionary terms, and the present disclosure should be construed with meanings and concepts that are consistent with the technical idea of the present disclosure based on the principle that the inventors can appropriately define concepts of the terms to appropriately describe their own invention in the best way.

The terms used herein are provided to describe exemplary embodiments but not to limit the inventive concept. The singular forms include plural forms unless the context clearly indicates otherwise.

It should be understood that the terms "comprise", "include", "have", etc. are used herein to specify the presence of stated features, integers, steps, components or combinations thereof, but do not preclude the presence or addition of one or more other features, integers, steps, components, or combinations thereof.

In the present disclosure, "particle size D₅₀" refers to a particle size corresponding to a cumulative volume of 50% in the particle size distribution of a positive electrode material powder, and may be measured by a laser diffraction method. For example, the average particle diameter may be measured by dispersing a positive electrode material powder in a dispersion medium, introducing the resultant into a commercially available laser diffraction particle size analyzer (e.g., Microtrac MT 3000), performing irradiation with ultrasonic waves at a frequency of about 28 kHz and an output of 60W, obtaining a volume-cumulative particle size distribution graph, and then determining a particle size corresponding to a cumulative volume of 50%.

As used herein, "specific surface area" is measured by a BET (Brunauer-Emmett-Teller) method, and particularly, may be calculated from the adsorption amount of nitrogen gas under a liquid nitrogen temperature(77K) by using BELSORP-mini II available from BEL Japan Inc.

As used herein, "SOC (State of Charge) X" refers to a state where the percentage(%) of the capacity charged in the battery cell based on the discharge capacity appearing when the battery cell is discharged to a discharging cut-off voltage, for example, from 4.6 V to a discharging cut-off voltage, e.g., 2.0 V, is X.

Since lithium-rich manganese-based oxides achieve capacity by simultaneously utilizing not only the cation redox reaction of the transition metal but also the anion redox reaction using oxygen in the positive electrode structure, it is possible to achieve high capacity. Specifically, the lithium-rich manganese-based oxide has a structure in which LiMO₂ (where M is a transition metal) having a layered structure and Li₂MnO₃ having a rock-salt structure are intermingled, wherein an activation process is performed at a high voltage of 4.3V or more, so that Li₂MnO₃ can be activated to achieve high capacity. However, there is a problem that oxygen desorption occurs in the high-voltage activation process, so that excessive amounts of gases are generated, the resistance of the positive electrode is remarkably increased and elution of transition metals such as manganese is generated. If the activation voltage is lowered, the amount of gas generated in the activation process can be reduced, but in this case, there may be a problem that abnormal behavior occurs in which the capacity increases abnormally while activating the Li₂MnO₃ phase remaining in the crystal structure in the operation process of the battery, and additional gas is generated.

The present inventor has conducted repeated research to improve the resistance and capacity characteristics of lithium secondary batteries applied with a lithium-rich manganese-based oxide, and as a result, found that when manufacturing a lithium secondary battery, an activation process is performed under a specific range of charge and discharge conditions, which minimizes cation mixing and oxygen desorption, improves the positive electrode and cell resistance characteristics and capacity characteristics, reduces the amount of gas generation and manganese elution, and thus improves the life characteristics of the battery, and have completed the invention.

### Manufacturing method of lithium secondary battery

A manufacturing method of a lithium secondary battery according to an embodiment comprises: a step (S1) of manufacturing a preliminary cell which comprises a positive electrode containing a positive electrode active material, a negative electrode, a separator and an electrolyte; and a step (S2) of charging the preliminary cell to a charging cut-off voltage and discharging the preliminary cell to the discharging cut-off voltage to activate the preliminary cell, wherein the positive electrode active material includes a lithium-rich manganese-based oxide containing 50 mol% or more of manganese(Mn) among all metals excluding lithium, and having a molar ratio of lithium to all metals excluding lithium (Li/Me) exceeding 1, and wherein the charging cut-off voltage is more than 4.3V, and the discharging cut-off voltage is 2.6V or more.

Below, each step of the manufacturing method of a lithium secondary battery according to an embodiment is described in detail.

### (1) Step S1: Manufacturing preliminary cell

First, a step (S1) of manufacturing a preliminary cell which comprises a positive electrode containing a positive electrode active material, a negative electrode, a separator and an electrolyte is performed.

In this case, the step of manufacturing a preliminary cell may include: a step of sequentially stacking a positive electrode, a separator, and a negative electrode to assemble an electrode assembly, and a step of housing the electrode assembly in a battery case, injecting an electrolyte, and then sealing the battery case. The sealing may be performed by thermally welding or thermally fusing an open portion of the battery case.

In this case, the preliminary cell may mean a lithium secondary battery before undergoing an activation step of the lithium secondary battery. Specifically, it may mean a lithium secondary battery in a state of not undergoing the process of activation by charging or charging/discharging.

The positive electrode includes a positive electrode active material. Specifically, the positive electrode may include a positive electrode current collector; and a positive electrode active material layer positioned on the positive electrode current collector, and the positive electrode active material layer may include a positive electrode active material.

The positive electrode current collector is not particularly limited as long as it has high conductivity without causing a chemical change in the battery, and, for example, stainless steel, aluminum, nickel, titanium, fired carbon, or an aluminum or stainless steel which is surface-treated with carbon, nickel, titanium, silver, or the like. Further, the positive electrode current collector may generally have a thickness of 3 to 500µm. Also, the positive electrode current collector may have fine protrusions and depressions formed on a surface thereof to enhance adherence of a positive electrode active material. For example, the positive electrode current collector may be used in various forms such as a film, a sheet, a foil, a net, a porous body, a foaming body, and a non-woven fabric structure.

The positive electrode active material layer may be positioned on the positive electrode current collector, and specifically, it may be positioned on one or both surfaces of the positive electrode current collector. The positive electrode active material layer may have a single-layered or a multi-layered structure having two or more layers thereof.

The positive electrode active material includes a lithium-rich manganese-based oxide containing 50 mol% or more of manganese(Mn) among all metals excluding lithium, and having a ratio of the number of moles of lithium to all metals excluding lithium(Li/Me) exceeding 1.

In the case of a lithium-rich manganese-based oxide containing an excessive lithium, it has a structure in which a layered phase(LiM'O₂) and a rock-salt phase(Li₂MnO₃) are intermingled. While the rock-salt phase is activated during the initial activation process, excessive lithium ions are generated, thereby capable of achieving high capacity.

For example, the lithium-rich manganese-based oxide may be represented by the following [Chemical Formula 1].

[Chemical Formula 1] Liₓ₁Mn_{y1}M¹_{1-y1}O₂

wherein in Chemical Formula 1, M¹ is at least one element selected from the group consisting of Ni, Al, B, Co, W, Mg, V, Ti, Zn, Ga, In, Ru, Nb, Sn, Sr, and Zr.

The x1 is the molar ratio of Li in the lithium-rich manganese-based oxide, which may be 1<x1≤1.5, preferably 1.1≤x1≤1.5. When x1 satisfies the above range, the irreversible capacity of a negative electrode active material can be sufficiently compensated, and high-capacity characteristics can be realized.

The y1 is the molar ratio of Mn in the lithium-rich manganese-based oxide, which may be 0.5≤y1≤1, preferably 0.5≤y1<1, or 0.55≤y1≤0.85. When y1 is less than 0.5, the ratio of the rock-salt phase is too small, so that the negative electrode irreversibility compensation and capacity improvement effects are slight.

Meanwhile, in the lithium-rich manganese-based oxide represented by [Chemical Formula 1], the mole ratio of Li to the number of moles of all metal elements excluding Li (Li/Me) may be 1.1 to 1.5, 1.13 to 1.5, or 1.2 to 1.4. When the Li/Me ratio satisfies the above range, the rate characteristics and capacity characteristics are exhibited excellently. If the Li/Me ratio is too high, the electrical conductivity decreases, the rock-salt phase(Li₂MnO₃) increases, which may accelerate the degradation speed, and if the Li/Me ratio is too low, the energy density improvement effect is slight.

Preferably, the lithium-rich manganese-based oxide may be represented by the following [Chemical Formula 1-1].

[Chemical Formula 1-1] Lix₂Ni_{y2}Co_{z2}Mn_{w2}M²v₂O₂

wherein in Chemical Formula 1-1, M² may be at least one selected from the group consisting of Al, B, Co, W, Mg, V, Ti, Zn, Ga, In, Ru, Nb, Sn, Sr, and Zr.

Meanwhile, x2 may be a molar ratio of Li in the lithium-rich manganese-based oxide, and may be 1<x2, 1.1≤x2≤1.5, or 1.2≤x2≤1.4. As the a satisfies the above range, the irreversible capacity of a negative electrode can be sufficiently compensated, and high-capacity characteristics can be realized.

The y2 may be a molar ratio of Ni in the lithium-rich manganese-based oxide, which may be 0≤y2≤0.5, 0.1≤y2≤0.4, or 0.2≤y2≤0.4.

The z2 is the molar ratio of Co in the lithium-rich manganese-based oxide, which may be 0≤z2≤0.1, 0≤z2≤0.08, or 0≤z2≤0.05. If z2 is more than 0.1, it is difficult to secure high capacity, and generation of gas and deterioration of the positive electrode active material may become intensified, which may deteriorate the life characteristics.

The w2 is the molar ratio of Mn in the lithium-rich manganese-based oxide, which may be 0.5≤w2<1.0, 0.50≤w2≤0.80, or 0.50≤w2≤0.70. If w2 is less than 0.5, the ratio of the rock-salt phase is too small, and the negative electrode irreversibility compensation and capacity improvement effects are slight.

The v2 is a molar ratio of the doping element M in the lithium-rich manganese-based oxide, which may be 0≤v2≤0.2, 0≤v2≤0.1, or 0≤v2≤0.05. If the content of the doping element is too high, it may adversely affect the capacity of the active material.

Meanwhile, the composition of the lithium-rich manganese-based oxide may be represented by the following [Chemical Formula 2].

[Chemical Formula 2] a2 Li₂MnO₃·(1-a2)Li[Ni_{1-b2-c2-d2}Mn_{b2}Co_{c2}M⁴_{d2}]O₂

wherein in [Chemical Formula 2], M⁴ may be at least one selected from the group consisting of metal ions Al, B, Co, W, Mg, V, Ti, Zn, Ga, In, Ru, Nb, Sn, Sr, and Zr.

The a2 means the ratio of Li₂MnO₃ phase in the lithium-rich manganese-based oxide, which may be 0.2≤a2≤0.5, 0.25≤a2≤0.5, or 0.25≤a2≤0.4. When the ratio of Li₂MnO₃ phase in the lithium-rich manganese-based oxide satisfies the above range, the irreversible capacity of a negative electrode can be sufficiently compensated, and high capacity characteristics can be realized.

The b2 means the molar ratio of Mn in the layered phase LiM'O₂, which may be 0.4≤b2<1, 0.4≤b2≤0.8, or 0.4≤b2≤0.7.

The c2 means the molar ratio of Co in the layered phase LiM'O₂, which may be 0≤c2≤0.1, 0≤c2≤0.08, or 0≤c2≤0.05. When c2 is more than 0.1, the generation of gas and degradation of the positive electrode active material may become intensified, which may result in deterioration of the life characteristics.

The d2 is the molar ratio of the doping element M⁴ in the LiM'O₂ layer, which may be 0≤d2≤0.2, 0≤d2≤0.1, or 0≤d2≤0.05.

On the other hand, the positive electrode active material may further include a coating layer on the surface of the lithium-rich manganese-based oxide, if necessary. When the positive electrode active material includes a coating layer, contact between the lithium-rich manganese-based oxide and the electrolyte is suppressed by the coating layer, and side reactions of the electrolyte are reduced, thereby capable of obtaining the effect of improving life characteristics.

The coating layer may include a coating element M⁵, and the coating element M⁵ may be, for example, at least one selected from the group consisting of Al, B, Co, W, Mg, V, Ti, Zn, Ga, In, Ru, Nb, Sn, Sr and Zr, preferably, Al, Co, Nb, W, and a combination thereof, and more preferably, Al, Co, and a combination thereof. The coating element M⁵ may include two or more types, for example, Al and Co.

The coating layer can be formed through methods such as dry coating, wet coating, chemical vapor deposition(CVD), physical vapor deposition(PVD), and atomic layer deposition(ALD). Among these, it is preferable to form it through atomic layer deposition in that the coating layer can be formed to have a wider area.

The formation area of the coating layer may be 10-100%, preferably 30~100%, and more preferably 50~100%, based on the total surface area of the lithium-rich manganese-based oxide particles When the formation area of the coating layer satisfies the above range, the effect of improving life characteristics is excellent.

On the other hand, the positive electrode active material according to the present disclosure may be in the form of primary particles or secondary particles in which a plurality of primary particles are agglomerated.

The average particle size D₅₀ of the positive electrode active material may be 1.5µm to 13µm. The average particle size(D₅₀) of the positive electrode active material may be 1.5µm or more, 2µm or more, 2.3µm or more, and 13µm or less, 12µm or less, 11µm or less, 10µm or less, or 9µm or less. When the above range is satisfied, the electrode density may be excellently achieved, and the deterioration of the capacity and rate characteristics can be minimized.

Specifically, the positive electrode active material may include a first positive electrode active material and a second positive electrode active material having different average particle sizes(D₅₀), and the average particle size of the first positive electrode active material may be larger than the average particle size of the second positive electrode active material. In this case, when rolling an electrode, the second positive electrode active material having a small particle size can be filled into the voids of the first positive electrode active material having a large particle size, thereby increasing the electrode density and thus enabling achievement of a high energy density per unit volume.

The average particle size(D₅₀) of the first positive electrode active material may be 6µm to 15µm. Specifically, the average particle size(D₅₀) of the first positive electrode active material may be 6µm or more, 6.5µm or more, 7µm or more, 7.5µm or more, 8µm or more, 8.5µm or more, or 9µm or more, and 15µm or less, 14µm or less, 13µm or less, 12µm or less, or 11µm or less.

The average particle size(D₅₀) of the second positive electrode active material may be 0.5µm to 6µm. Specifically, the average particle size(D₅₀) of the second positive electrode active material may be 0.5µm or more, 1.0µm or more, 1.5µm or more, 2µm or more, or 2.5µm or more, and be 6µm or less, 5.5µm or less, 5µm or less, 4.5µm or less, and 4µm or less.

When the average particle sizes of the first positive electrode active material and the second positive electrode active material satisfy the above range, the second positive electrode active material particles are filled between the particles of the first positive electrode active material, and thus the tap density of the positive electrode active material including the same can be improved. The higher the tap density, the higher the packing density of the electrode. Therefore, when manufacturing the electrode using this, a slurry containing the positive electrode active material having the tap density can be thinly applied onto the surface of the positive electrode current collector, so that the thickness of the electrode after coating is improved thinly. In the process of rolling this, less pressure is required to reach the electrode thickness for matching the rolling density, so that cracking of the positive electrode active material due to rolling can be improved. In addition, as the energy density per unit volume is improved, the capacity characteristics can be further improved.

Further, the positive electrode active material may have a BET specific surface area of 0.9 m²/g to 5.0 m²/g. Specifically, the positive electrode active material may have a BET surface area of 0.9 m²/g or more, 0.95 m²/g or more, 1.0 m²/g or more, 1.05 m²/g or more, 1.1 m²/g or more, 1.15 m²/g or more, or 1.2 m²/g or more, and 5.0 m²/g or less, 4.5 m²/g or less, 4.0 m²/g or less, 3.5 m²/g or less, 3.0 m²/g or less, or 2.5 m²/g or less. When the BET surface area of the positive electrode active material satisfies the above range, the mobility (kinetic) of lithium ions at the interface between the positive electrode active material and the electrolyte can be secured to a certain level or more, thereby achieving sufficient capacity, and at the same time, side reactions with moisture or electrolyte can be prevented to reduce the amount of gas generated, thereby improving the life characteristics.

On the other hand, the lithium-rich manganese-based oxide can be produced by mixing a transition metal precursor and a lithium raw material and then baking the mixture.

As the lithium raw material, for example, lithium-containing carbonates (e.g., lithium carbonate, etc.), hydrates (e.g., lithium hydroxide hydrate(LiOH·H₂O), etc.), hydroxides (e.g., lithium hydroxide, etc.), nitrates (e.g., lithium nitrate(LiNO₃), etc.), chlorides (e.g., lithium chloride(LiCl), etc.), and the like can be used, and among these, one type alone or a mixture of two or more types can be used.

On the other hand, the transition metal precursor may be in the form of hydroxides, oxides, or carbonates. When the carbonate form of the precursor is used, it is more preferable in that a positive electrode active material with a relatively high specific surface area can be produced.

The transition metal precursor can be prepared by a co-precipitation process. For example, the transition metal precursor can be prepared by dissolving each transition metal-containing raw material in a solvent to prepare a metal solution, then mixing the metal solution, an ammonium cation complex forming agent, and a basic compound, and proceeding with a coprecipitation reaction. Further, if necessary, an oxidizing agent or oxygen gas may be further added during the coprecipitation reaction.

At this time, the transition metal-containing raw material may be acetate, carbonate, nitrate, sulfate, halide, sulfide, and the like of each transition metal. Specifically, the transition metal-containing raw material may be NiO, NiCO₃·2Ni(OH)₂·4H₂O, NiC₂O₂·2H₂O, Ni(NO₃)₂·6H₂O, NiSO₄, NiSO₄·6H₂O, Mn₂O₃, MnO₂, Mn₃O₄, MnCO₃, Mn(NO₃)₂, MnSO₄·H₂O, manganese acetate, manganese halide, and the like.

The ammonium cation complex forming agent may be at least one selected from the group consisting of NH₄OH, (NH₄)₂SO₄, NH₄NO₃, NH₄Cl, CH₃COONH₄, and (NH₄)₂CO₃.

The basic compound may be at least one selected from the group consisting of NaOH, Na₂CO₃, KOH, and Ca(OH)₂. The form of the precursor may vary depending on the type of the basic compound used. For example, when NaOH is used as a basic compound, a hydroxide form of the precursor can be obtained, and when Na₂CO₃ is used as a basic compound, a carbonate form of the precursor can be obtained. Further, when a basic compound and an oxidizing agent are used together, an oxide form of the precursor can be obtained.

On the other hand, the transition metal precursor and the lithium raw material can be mixed in an amount such that the molar ratio of total transition metals (Ni+Co+Mn):Li is 1:1.05-1:2, preferably 1:1.1-1:1.8, and more preferably 1:1.25-1:1.8.

On the other hand, the firing may be performed at a temperature of 600°C to 1000°C or 700°C to 950°C, and the firing time may be 5 hours to 30 hours or 5 hours to 20 hours. Further, the firing atmosphere may be an air atmosphere or an oxygen atmosphere, for example, an atmosphere containing oxygen at 20 to 100% by volume.

On the other hand, the positive electrode active material layer may further include a positive electrode conductive material and a positive electrode binder in addition to the positive electrode active material.

Examples of the positive electrode conductive material include spherical or flaky graphite; carbon-based material such as carbon black, acetylene black, ketjen black, channel black, furnace black, lamp black, thermal black, carbon fiber, single-wall carbon nanotubes, and multi-wall carbon nanotubes; metal powders or metal fibers such as copper, nickel, aluminum, and silver; conductive whiskers such as zinc oxide and potassium titanate; conductive metal oxides such as titanium oxide; or conductive polymers such as polyphenylene derivatives, and the like. Among these, one type alone or a mixture of two or more types can be used. The positive electrode conductive material can be contained in an amount of 0.1% by weight to 20% by weight based on the total weight of the positive electrode active material layer.

Further, the positive electrode binder, may include, for example, polyvinylidene fluoride(PVDF), a polyvinylidenefluoride-hexafluoropropylene copolymer(PVdF-co-HFP), polyvinyl alcohol, polyacrylonitrile, carboxymethylcellulose(CMC), starch, hydroxypropylcellulose, regenerated cellulose, polyvinylpyrrolidone, polytetrafluoroethylene, polyethylene, polypropylene, ethylene-propylene-diene monomer (EPDM) rubber, sulfonated EPDM, styrene-butadiene rubber(SBR), fluorine rubber, or various copolymers thereof, and any one type alone or a mixture of two or more types thereof can be used. The positive electrode binder may be contained in an amount of 1 to 20% by weight, based on the total weight of the positive electrode active material layer.

The positive electrode can be manufactured according to a usual positive electrode manufacturing method. For example, the positive electrode can be manufactured by mixing a positive electrode active material, a positive electrode binder and/or a positive electrode conductive material in a positive electrode solvent to prepare a positive electrode slurry, applying the positive electrode slurry onto a positive electrode current collector, followed by drying and rolling.

The positive electrode solvent may be any solvent commonly used in the art. The solvent may be dimethyl sulfoxide, (DMSO), isopropyl alcohol, N-methylpyrrolidone(NMP), acetone, water, or the like, and one type alone or a mixture of two or more types thereof may be used. The amount of solvent used will be sufficient so long as the solvent can dissolve or disperse the positive electrode active material, the conductive material and the binder in consideration of the thickness of slurry to be applied and the production yield, and then can have a viscosity capable of exhibiting excellent thickness uniformity when applied for producing the positive electrode.

Alternatively, the positive electrode may be manufactured by casting the positive electrode slurry on a separate support, and then laminating a film obtained by being detached from the support onto the positive electrode current collector.

On the other hand, the negative electrode may include a negative electrode active material. Specifically, the negative electrode may include a negative electrode current collector and a negative electrode active material layer positioned on the negative electrode current collector, and the negative electrode active material layer may include a negative electrode active material.

The negative electrode current collector is not particularly limited as long as it has high conductivity without causing chemical changes to the electrode. Examples of the negative electrode current collector may include copper, stainless steel, aluminum, nickel, titanium, baked carbon, a copper or stainless steel which is surface-treated with carbon, nickel, silver, or the like, an aluminum-cadmium alloy, or the like. Further, the negative electrode current collector may typically have a thickness of 3 to 500µm. Like the positive electrode current collector, fine protrusions and depressions may be formed on the surface of the current collector to enhance the bonding force of the negative electrode active material. For example, the negative electrode current collector may be used in various forms such as a film, a sheet, a foil, a net, a porous body, a foaming body, and a nonwoven fabric structure.

The negative electrode active material layer may be positioned on the negative electrode current collector, and specifically, may be positioned on one or both surfaces of the negative electrode current collector.

As the negative electrode active material, a compound capable of reversible intercalation and deintercalation of lithium may be used. Specific examples of the negative electrode active material may include a carbonaceous material such as artificial graphite, natural graphite, graphitized carbon fiber or amorphous carbon; a (semi)metal-based material capable of alloying with lithium, such as Si, Al, Sn, Pb, Zn, Bi, In, Mg, Ga, Cd, Si alloy, Sn alloy, or Al alloy; (semi)metal oxides capable of doping and dedoping lithium, such as SiO_{β} (0<β<2), SnO₂, vanadium oxide, and lithium vanadium oxide; or a composite containing the (semi)metal-based material and the carbonaceous material, such as Si-C composite or Sn-C composite, and any one or a mixture of two or more thereof may be used.

In addition, as the negative electrode active material, a metal lithium thin film may be used. Further, the carbonaceous material may be both low-crystalline carbon and highly-crystalline carbon. Soft carbon and hard carbon are typical low-crystalline carbon. Typical examples of the highly-crystalline carbon include amorphous, plate-like, flaky, spherical or fibrous natural graphite or artificial graphite, kish graphite, pyrolytic carbon, mesophase pitch based carbon fiber, meso-carbon microbeads, high-temperature baked carbon such as mesophase pitches and petroleum or coal tar pitch derived cokes.

On the other hand, the negative electrode active material layer may optionally further include a negative electrode conductive material and a negative electrode binder in addition to the negative electrode active material.

Further, the negative electrode conductive material is used to impart conductivity to the electrode, and the conductive material can be used without limitation as long as it has electronic conductivity without causing chemical changes in the battery to be configured. Specific examples thereof include graphite such as natural graphite, artificial graphite; carbonaceous materials such as carbon black, acetylene black, ketjen black, channel black, furnace black, lamp black, thermal black, carbon fiber, carbon nanotubes; metal powders or metal fibers such as copper, nickel, aluminum, silver; conductive whiskers such as zinc oxide and potassium titanate; conductive metal oxides such as titanium oxide; or conductive polymers such as polyphenylene derivatives, and the like. Among these, one type alone or a mixture of two or more types may be used. The negative electrode conductive material may be contained in an amount of 1 to 30% by weight, preferably 1 to 20% by weight, more preferably 1 to 10% by weight based on the total weight of the negative electrode active material layer.

The binder plays a role in making the particles of the negative electrode active material adhere well to each other and further improving an adhesive force between the negative electrode active material and the negative electrode current collector. Specific examples thereof may include polyvinylidene fluoride(PVDF), a polyvinylidenefluoride-hexafluoropropylene copolymer(PVdF-co-HFP), polyvinyl alcohol, polyacrylonitrile, carboxymethylcellulose(CMC), starch, hydroxypropylcellulose, regenerated cellulose, polyvinylpyrrolidone, polytetrafluoroethylene, polyethylene, polypropylene, ethylene-propylene-diene monomer(EPDM) rubber, sulfonated EPDM, styrene-butadiene rubber(SBR), fluorine rubber, or various copolymers thereof, and any one type alone or a mixture of two or more types thereof can be used. The negative electrode binder may be contained in an amount of 1 to 30% by weight, preferably 1 to 20% by weight, more preferably1 to 10% by weight, based on the total weight of the negative electrode active material layer.

The negative electrode can be manufactured according to a usual negative electrode manufacturing method. For example, the negative electrode can be manufactured by mixing a negative electrode active material, a negative electrode binder and/or a negative electrode conductive material in a negative electrode solvent to prepare a negative electrode slurry, applying the negative electrode slurry onto a negative electrode current collector, followed by drying and rolling.

The negative electrode solvent may be at least one selected from the group consisting of distilled water, ethanol, methanol, and isopropyl alcohol, preferably distilled water, in terms of facilitating dispersion of the components of the negative electrode slurry.

Alternatively, the negative electrode may be manufactured by casting the negative electrode slurry on a separate support, and then laminating a film obtained by being detached from the support onto the negative electrode current collector.

Next, the separator is to separate the negative electrode and the positive electrode and to provide a movement path for lithium ions. Any separator may be used without particular limitation as long as it is typically used as a separator in a lithium secondary battery. Particularly, a separator having high moisture-retention ability for an electrolyte as well as low resistance to the movement of electrolyte ions is preferable. Specifically, a porous polymer film, for example, a porous polymer film produced using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous non-woven fabric, for example, a non-woven fabric formed of glass fiber having a high melting point, polyethylene terephthalate fiber, or the like may be used. Also, a coated separator including a ceramic component or a polymer material may be used to secure heat resistance or mechanical strength, and may be selectively used in a single-layered or a multi-layered structure.

On the other hand, the electrode assembly may be various forms of electrode assemblies well known in the art, for example, a jelly-roll type, a stacked type, a stacked and laminated type, or a stack and folding type electrode assembly, and the form thereof is not particularly limited.

The jelly-roll type electrode assembly can be produced by interposing a sheet-shaped separator between a sheet-shaped positive electrode and a sheet-shaped negative electrode and then winding it in one direction.

The stacked type electrode assembly can be produced by cutting a positive electrode, a separator and a negative electrode into a desired shape and then sequentially stacking the cut positive electrode/separator/ negative electrode.

The stacked and laminated type electrode assembly can be produced by a method of stacking a positive electrode, a separator and a negative electrode to produce a plurality of unit cells, stacking the plurality of unit cells with a separator interposed therebetween, and then laminating them through a method such as heating.

The stack and folding type electrode assembly can be produced by a method of stacking a positive electrode, a separator and a negative electrode to produce a plurality of unit cells, arranging the plurality of unit cells on one or both surfaces of a long folding separator and then winding the folding separator.

On the other hand, the electrolyte used herein may include various electrolytes that can be used in lithium secondary batteries, such as an organic liquid electrolyte, an inorganic liquid electrolyte, a solid polymer electrolyte, a gel-type polymer electrolyte, a solid inorganic electrolyte, a melt-type inorganic electrolyte, or a combination thereof, and the type thereof is not particularly limited.

For example, the electrolyte may include an organic solvent and a lithium salt.

The organic solvent can be used without any particular limitation as long as it serves as a medium through which ions involved in the electrochemical reaction of the battery may migrate. Specific examples of the organic solvent may include an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate(DMC), diethyl carbonate(DEC), ethylmethyl carbonate(EMC), ethylene carbonate(EC), or propylene carbonate(PC); an alcohol-based solvent such as ethyl alcohol or isopropyl alcohol; nitriles such as R-CN (wherein R is a linear, branched or cyclic hydrocarbon group having 2 to 20 carbon atoms, and may include a double bond, an aromatic ring or ether bond); amides such as dimethylformamide; dioxolanes such as 1,3-dioxolane; sulfolane; or the like.

The lithium salt can be used without any particular limitation as long as it is a compound capable of providing lithium ions used in the lithium secondary battery. Specifically, the anion of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, and the lithium salt that can be used herein may be LiPF₆, LiN(FSO₂)₂, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, Lil, LiB(C₂O₄)₂ or the like. The concentration of the lithium salt may be preferably used within the range of 0.1 to 5.0M.

In order to improve the life characteristics of the battery, suppress the decrease of the battery capacity, improve the discharging capacity of the battery, etc., the electrolyte may further include an additive, in addition to the above electrolyte components. For example, the additive may, include at least one selected from the group consisting of a halogen-substituted carbonate-based compound, a sulfate-based compound, a sultone-based compound, a borate-based compound, a benzene-based compound, an amine-based compound, a silane-based compound, and a lithium salt-based compound. For example, as the additive, a haloalkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, and the like may be used alone or in combination, but are not limited thereto. The additive may be contained in an amount of 0.1 to 10% by weight, preferably 0.1 to 5% by weight, based on the total weight of the electrolyte.

On the other hand, as the battery case, various battery cases known in the art, for example, a cylindrical battery case, a prismatic battery case, or a pouch-type battery case, and the like can be used, and the type thereof is not particularly limited.

### (2) Step S2: Activating preliminary cell

After the preliminary cell is manufactured through the S1 step, a step (step S2) of charging the preliminary cell to a charging cut-off voltage and discharging the preliminary cell to the discharging cut-off voltage to activate the preliminary cell is performed.

The activating step means the process of charging and discharging the preliminary cell to impart electrical properties and forming a SEI (Solid Electrolyte Interphase) film on the electrodes to stabilize the battery, so that the battery is made into an actually usable state. In addition, the charging cut-off voltage means a voltage at which charging is finished in a charge process. The discharging cut-off voltage means a voltage at which discharging is finished in a discharge process.

In the method of an embodiment, the charging and discharging of the activating step are performed so as to satisfy both the ranges of the charging cut-off voltage and the discharging cut-off voltage, thereby enabling the lithium secondary battery including a lithium-rich manganese-based oxide to achieve high capacity and suppressing the occurrence of oxygen desorption and cation mixing in the activation process. As a result, it is possible to reduce the amount of gas generated from the battery, improve the resistance characteristics, and suppress the increase in the positive electrode resistance during charging and discharging, thereby improving the resistance characteristics and life characteristics. In addition, since the activation time is reduced, the production time can be reduced when manufacturing a lithium secondary battery, so that the processability and productivity can be improved.

First, a step of charging the preliminary cell to the charging cut-off voltage is performed.

In this case, the charging cut-off voltage is more than 4.3 V. Specifically, the charging cut-off voltage may be more than 4.3 V, 4.35V or more, 4.4V or more, 4.45V or more, 4.5V or more, and 4.7V or less, 4.68V or less, 4.65V or less, 4.64V or less, 4.62V or less, or 4.6V or less. When the lithium-rich manganese-based oxide is activated at a low voltage, abnormal behavior occurs in which the capacity increases abnormally while activating the Li₂MnO₃ phase remaining in the crystal structure in the operation process of the battery, and additional gas is generated. Therefore, the method of an embodiment has solved the above problems by charging the lithium secondary battery to a charging cut-off voltage of more than 4.3V in a charge process. Meanwhile, if the charging cut-off voltage is mor than 4.7V, excessive oxygen desorption may occur in the lithium-rich manganese-based oxide, and an excessive amount of gas is generated, which may deteriorate the battery processability, stability, and life characteristics. Therefore, if the charging cut-off voltage satisfies the above range, the lithium-rich manganese-based oxide may be activated, thereby improving life characteristics even while achieving high capacity characteristics.

On the other hand, the charging may include a 1st charging performed at a C-rate of 0.04C to 0.5C and a 2nd charging performed at a C-rate of 0.3C to 1.2C. In the activating step, the charging is performed in two or more steps having different C-rates, thereby forming a strong SEI film on the electrode, and at the same time, maximally suppressing the occurrence of oxygen desorption and cation mixing in the activating step.

The 1st charging may be performed at a C-rate of 0.04C to 0.5C. Specifically, the 1st charging can be performed at a C-rate of 0.04C or more, 0.06C or more, 0.08C or more, 0.1C or more, 0.12C or more, 0.14C or more, 0.16C or more, 0.18C or more, and at a C-rate of 0.5C or less, 0.48C or less, 0.46C or less, 0.44C or less, 0.42C or less, 0.4C or less, 0.38C or less, 0.36C or less, 0.34C or less, 0.32C or less, 0.3C or less, 0.28C or less, 0.26C or less, 0.24C or less, 0.22C or less.

If the C rate in the 1st charging is greater than 0.5C, an SEI film may be unstably formed on the electrode surface, and if the SEI film is unstably formed on the electrode surface, the SEI film may be easily decomposed during battery operation, causing rapid deterioration of the electrode, which may lead to a significant decrease in life characteristics. In addition, if the C-rate in the 1st charging is less than 0.04C, the large amount of time is required for activation, which may lead to a decrease in mass productivity of the lithium secondary battery. That is, if the 1st charging is performed at the C-rate, the mass productivity of the lithium secondary battery may be secured while the SEI film is strongly formed on the electrode surface in the activating step.

The 1st charging may be performed until the SOC of the preliminary cell becomes 1 to 10. This may mean that the 1st charging may be performed from the SOC of the preliminary cell of 0 until the SOC becomes 1 to 10. Specifically, the 1st charging may be performed until the SOC of the preliminary cell becomes 1 or more, 2 or more, 2.5 or more, and 10 or less, 9 or less, 8 or less, 7 or less, 6 or less, 5 or less, 4 or less, 3 or less. In this case, a strong and dense SEI film is formed on the electrode surface in the lithium secondary battery manufactured by activating the preliminary cell, thereby achieving excellent life characteristics.

The 1st charging may be performed in a constant-current mode (CC mode).

The 2nd charging may be performed at a C-rate of 0.3C to 1.2C. Specifically, the 2nd charging may be performed at a C-rate of 0.3C or more, 0.32C or more, 0.34C or more, 0.36C or more, 0.38C or more, and 0.4C or more, and at a C-rate of 1.2C or less, 1.18C or less, 1.16C or less, 1.14C or less, 1.12C or less, 1.1C or less, 1.08C or less, 1.06C or less, 1.04C or less, 1.02C or less, and 1.0C or less.

When the 2nd charging is performed at the C-rate in the above range, the activation of the Li₂MnO₃ (monoclinic) phase in the crystal structure of the positive electrode active material including the lithium-rich manganese-based oxide is reduced, thereby suppressing the occurrence of oxygen desorption and cation mixing during the activation process. As a result, it is possible to reduce the amount of gas generated in the activation step. In addition, the 2nd charging is performed at a C rate that is relatively faster than the 1st charging, thereby reducing the time required for the step of activating the preliminary cell, shortening the production time of the lithium secondary battery and improving mass productivity.

The 2nd charging may be performed after the 1st charging until the SOC of the preliminary cell becomes 80 to 100. This may mean that the 1st charging may be performed until the SOC of the preliminary cell becomes 1 to 10, and then the 2nd charging may be performed until the SOC becomes 80 to 100. Specifically, the 2nd charging may be performed after the 1st charging until the SOC of the preliminary cell becomes 80 or more, 82 or more, 84 or more, 86 or more, 88 or more, 90 or more, 92 or more, 94 or more, 96 or more, 98 or more, and 100 or less. When the SOC satisfies the above range, it is possible to prevent the SEI film from being incompletely formed, and the occurrence of oxygen desorption and cation mixing can be reduced in the step of activating the preliminary cell, thereby minimizing the increase in the positive electrode resistance.

On the other hand, the 2nd charging may be performed in two or more steps with different C-rates, if necessary. For example, the 2nd charging may include a 2-1 charging performed at a C-rate of 0.8C to 1.2C and a 2-2 charging performed at a C-rate of 0.3C to 0.6C. Specifically, the 2-1 charging can be performed at a C-rate of 0.8C or more, 0.85C or more, 0.9C or more, 0.95C or more, and at a C-rate of 1.2C or less, 1.15C or less, 1.1C or less, 1.05C or less. In addition, the 2-2 charging may be performed at a C-rate of 0.3C or more, 0.32C or more, 0.34C or more, 0.36C or more, 0.38C or more, and at a C-rate of 0.6C or less, 0.55C or less, 0.5C or less, 0.45C or less.

At this time, the 2-1 charging may be performed after the 1st charging until the SOC of the preliminary cell becomes 40 to 80. Specifically, the 2-1 charging may be performed after the 1st charging until the SOC of the preliminary cell becomes 40 or more, 45 or more, 50 or more, 55 or more, or 60 or more, and may be performed until it becomes 80 or less, 75 or less, 70 or less, or 65 or less. In addition, the 2-2 charging may be performed after the 2-1 charging until the SOC of the preliminary cell becomes 80 to 100. Specifically, the 2-2 charging may be performed after the 2-1 charging until the SOC of the preliminary cell becomes 80 or more, 85 or more, 90 or more, 95 or more, and may be performed until it becomes 100 or less. By performing the 2nd charging step in two steps as described above, lithium ions may be smoothly inserted into the negative electrode even in a high SOC region, thereby preventing a lithium plating phenomenon in which lithium ions are precipitated on the negative electrode surface, and securing the performance and stability of the battery.

The 2nd charging may be performed in a constant current mode (CC mode) or a constant current-constant voltage mode (CC-CV mode). Specifically, the 2-1 charging may be performed in a constant current mode, and the 2-2 charging may be performed in a constant current-constant voltage mode.

Specifically, when the 2nd charging or the 2-2 charging is performed in a constant current-constant voltage mode, the 2nd charging or the 2-2 charging can be performed up to the charging cut-off current. The charging cut-off current may be 0.02C to 0.25C. Specifically, the charging cut-off current may be a C-rate of 0.02C or more, 0.04C or more, 0.06C or more, 0.08C or more, and a C-rate of 0.25C or less, 0.23C or less, 0.21C or less, 0.2C or less, 0.18C or less, 0.16C or less, 0.14C or less, 0.12C or less, 0.1C or less. When constant voltage charging is performed, the current value decreases while the full charge voltage is maintained, and the current value at which charging stops is called the charging cut-off current. When the range of the above charging cut-off current is satisfied, Li₂MnO₃ activation may be sufficiently performed in the step of activating the preliminary cell, and the activation time can be shortened to thereby improve mass productivity.

Next, a step of discharging the preliminary cell to a discharging cut-off voltage is performed.

In this case, the discharging cut-off voltage is 2.6 V or more. Specifically, the discharging cut-off voltage may be 2.6V or more, 2.65V or more, 2.7V or more, 2.75V or more, 2.8V or more, 2.85V or more, 2.9V or more, 2.95V or more, 3.0V or more, 3.05V or more, 3.1V or more, 3.15V or more, 3.2V or more, or 3.25V or more, and 3.7V or less, 3.65V or less, 3.6V or less, 3.55V or less, 3.5V or less, 3.45V or less, 3.4V or less, 3.35V or less, or 3.3V or less. When the discharging cut-off voltage is adjusted to 2.6 V or more, the side reaction occurring on the positive electrode surface during charge and discharge can be reduced, thereby reducing surface oxides. In addition, when the discharging cut-off voltage is too high, a reverse voltage phenomenon can occur. Therefore, when the discharging cut-off voltage satisfies the above range, the positive electrode and cell resistance characteristics are improved, the initial resistance can be reduced, the time required for battery activation can be reduced, thereby enhancing mass productivity, and improving the life characteristics of the lithium secondary battery.

On the other hand, in the activating step, the discharging may be performed at a C rate of 0.4C to 1.5C. Specifically, the discharging may be performed at a C-rate of 0.4C or more, 0.45C or more, 0.5C or more, 0.55C or more, 0.6C or more, and at a C-rate of 1.5C or less, 1.45C or less, 1.4C or less, 1.35C or less, 1.3C or less, 1.25C or less, 1.2C or less, 1.15C or less, 1.1C or less, 1.05C or less, or 1.0C or less. If the above range is satisfied, the activation time can be reduced thereby securing mass productivity and at the same time, sufficiently activating the battery.

The activating step may be performed so that the ratio (B/A) of the charging capacity (B) in the range from 4.3 V to the charging cut-off voltage to the total charging capacity (A) when the preliminary cell is charged to the charging cut-off voltage becomes 0.60 or less. Specifically, the activating step may be performed so that the B/A becomes 0.60 or less, 0.59 or less, or 0.58 or less. When the above range is satisfied, gas generation and transition metal elution can be suppressed during battery operation, thereby improving the life characteristics of the battery.

In addition, the activation process may be performed under pressurized conditions, if necessary. The pressurization can be performed by mounting the battery-cell on a jig and then applying pressure to the battery-cell through the jig. If the activation process is performed under pressurized conditions, there is an advantage that the gas generated during the activation process can be easily discharged.

On the other hand, although this is not essential, the activating step can further include an aging step, if necessary. The aging step is intended to allow the electrolyte to be uniformly impregnated into the electrode assembly and to stabilize the battery, and can be performed before charging, during charging, and/or after discharging, and can be performed one or more times.

The aging step may be performed at a temperature of, for example, 20°C to 60°C, preferably 20°C to 50°C, more preferably 30°C to 50°C. When aging is performed at the above temperature, electrolyte impregnation and lithium mobility are improved, so that activation can be performed more smoothly.

Hereinafter, the manufacturing method of the lithium secondary battery will be described in more detail by way of specific examples.

### Example 1

### <Manufacturing of preliminary cell>

Li_{1.14}[Ni_{0.45}Mn_{0.55}]_{0.86}O₂ as the positive electrode active material, carbon nanotubes(CNT) as the conductive material, and polyvinylidene fluoride(PVDF) as the binder were mixed in a weight ratio of 97:1:2 in N-methyl pyrrolidone to prepare a composition for forming a positive electrode. The composition for forming a positive electrode was applied to an aluminum(Al) metal thin film having a thickness of 12µm, dried, and then rolled to prepare a positive electrode. At this time, the BET specific surface area of the positive electrode active material was measured to be 1.34 m²/g for the small particle-diameter positive electrode active material and 1.37 m²/g for the large particle-diameter positive electrode active material, and the average particle size(D₅₀) was measured to be 3.96µm for the small particle-diameter positive electrode active material and 9.56µm for the large particle-diameter positive electrode active material.

Graphite as the negative electrode active material, carbon nanotubes(CNT) as the conductive material, and styrene-butadiene rubber(SBR)/carboxymethyl cellulose(CMC) as the binder were mixed in a weight ratio of 96:1:3 in distilled water to prepare a composition for forming a negative electrode. The composition for forming a negative electrode was applied to a copper(Cu) metal thin film having a thickness of 8 µm, dried, and then rolled to prepare a negative electrode.

A separator was interposed between the positive and negative electrodes prepared as described above to prepare an electrode assembly, and the electrode assembly was inserted into a battery case and an electrolyte was injected to manufacture a preliminary cell.

### <Manufacturing of lithium secondary battery>

The preliminary cell was charged up to SOC 3 at 45°C under a CC and 0.2C condition (1st charging), and charged up to SOC 60 under a CC and 1.0C condition (2-1 charging), and then charged with constant current under a CC-CV (Constant Current-Constant Voltage) and 0.4C condition to a charging cut-off voltage of 4.6V, and then charged with constant voltage to a charging cut-off current of 0.05C (2-2 charging). Subsequently, the preliminary cell was discharged to a discharging cut-off voltage of 3.0V at 1.0C to activate the preliminary cell, thereby manufacturing a lithium secondary battery.

### Example 2

A lithium secondary battery was manufactured in the same manner as in Example 1, except that after charging the preliminary cell, the preliminary cell was discharged to a discharging cut-off voltage of 3.5V at 1.0C to activate the preliminary cell.

### Example 3

### <Manufacturing of preliminary cell>

Li_{1.15}Ni_{0.29}Mn_{0.56}O₂ as the positive electrode active material, carbon nanotubes(CNT) as the conductive material, and polyvinylidene fluoride(PVDF) as the binder were mixed in a weight ratio of 94:1:2 in N-methyl pyrrolidone to prepare a composition for forming a positive electrode. The composition for forming a positive electrode was applied to an aluminum(Al) metal thin film having a thickness of 12µm, dried, and then rolled to prepare a positive electrode. At this time, the BET specific surface area of the positive electrode active material was measured to be 4.49 m²/g for the small particle-diameter positive electrode active material, and 4.07 m²/g for the large particle-diameter positive electrode active material, and the average particle size (D₅₀) was measured to be 2.9µm for the small particle-diameter positive electrode active material and 10.5µm for the large particle-diameter positive electrode active material.

Graphite as the negative electrode active material, carbon nanotubes(CNT) as the conductive material, and styrene-butadiene rubber(SBR)/carboxymethyl cellulose(CMC) as the binder were mixed in a weight ratio of 96:1:3 in distilled water to prepare a composition for forming a negative electrode. The composition for forming a negative electrode was applied to a copper(Cu) metal thin film having a thickness of 8 µm, dried, and then rolled to prepare a negative electrode.

A separator was interposed between the positive and negative electrodes prepared as described above to prepare an electrode assembly, and the electrode assembly was inserted into a battery case and an electrolyte was injected to manufacture a preliminary cell.

### <Manufacturing of lithium secondary battery>

The preliminary cell was charged up to SOC 3 at 45°C under a CC and 0.2C condition (1st charging), and charged up to SOC 60 under a CC and 1.0C condition (2-1 charging), and then charged with constant current under a CC-CV(Constant Current-Constant Voltage) and 0.4C condition to a charging cut-off voltage of 4.6V, and then charged with a constant voltage to a charging cut-off current of 0.05C (2-2 charging). Subsequently, the preliminary cell was discharged to a discharging cut-off voltage of 3.0V at 0.6C to activate the preliminary cell, thereby manufacturing a lithium secondary battery.

### Example 4

A lithium secondary battery was manufactured in the same manner as in Example 3, except that after charging the preliminary cell, the preliminary cell was discharged to a discharging cut-off voltage of 3.5V at 0.6C to activate the preliminary cell.

### Comparative Example 1

A lithium secondary battery was manufactured in the same manner as in Example 1, except that after charging the preliminary cell, the preliminary cell was discharged to a discharging cut-off voltage of 2.0V at 1.0C to activate the preliminary cell.

### Comparative Example 2

A lithium secondary battery was manufactured in the same manner as in Example 3, except that after charging the preliminary cell, the preliminary cell was discharged to a discharging cut-off voltage of 2.0V at 0.6C to activate the preliminary cell.

With respect to Examples 1~4 and Comparative Examples 1-2, the ratio (B/A) of the charging capacity(B) in the range from 4.3V to the charging cut-off voltage to the total charging capacity(A) when the preliminary cell was charged to the charging cut-off voltage is shown in Table 1 below.

**[Table 1]**

| | The ratio (B/A) of the charging capacity(B) in the range from 4.3V to the charging cut-off voltage to the total charging capacity(A) |
|---|---|
| Example 1 | 0.579 |
| Example 2 | 0.579 |
| Example 3 | 0.604 |
| Example 4 | 0.604 |
| Comparative Example 1 | 0.579 |
| Comparative Example 2 | 0.604 |

### Experimental Example 1: Measurement of initial discharge capacity

The lithium secondary batteries manufactured by performing the activation process of Examples 1~2 and Comparative Example 1 were charged and discharged in the voltage range of 2.0V to 4.35V under 0.33C conditions, respectively, and the discharging capacity of the second cycle was measured. As the measurement result, the relative initial discharge capacities of Examples 1~2 based on the initial discharge capacity of Comparative Example 1 set forth by A are shown in Table 2 below, and the relative initial discharge capacities of Examples 3~4 based on the initial discharge capacity of Comparative Example 2 set forth by B are shown in Table 2 below.

**[Table 2]**

| | Initial discharge capacity [Ah] |
|---|---|
| Example 1 | 1.007 A |
| Example 2 | 1.014 A |
| Example 3 | 1.006 B |
| Example 4 | 1.006 B |
| Comparative Example 1 | A |
| Comparative Example 2 | B |

Referring to Table 2, it can be confirmed that Examples 1~2 and 3~4 have improved initial discharge capacities compared to Comparative Examples 1 and 2, respectively.

### Experimental Example 2: Measurement of initial discharge resistance

The discharge resistance values of the lithium secondary batteries manufactured in Examples 1~2 and Comparative Example 1 were measured.

Specifically, for the lithium secondary batteries manufactured in Examples 1~2 and Comparative Example 1, the cell resistance (SOC50 discharge resistance) was measured by dividing the voltage drop value that appeared in a state where a discharge pulse was applied for 0.1 seconds and 10 seconds at a current of 2.5 C at SOC 50% by the current value. As the measurement results, the relative discharge resistance values based on Comparative Example 1 with the discharge resistances at 0.1 seconds and 10 seconds of Comparative Example 1 set forth by C and D are shown in Table 3 below.

**[Table 3]**

| | Discharge resistance at 0.1 seconds [Ω] | Discharge resistance at 10 seconds [Ω] |
|---|---|---|
| Example 1 | 0.976 C | 0.98 D |
| Example 2 | 0.958 C | 0.967 D |
| Comparative Example 1 | C | D |

Referring to Table 3, it can be confirmed that the lithium secondary batteries of Examples 1 and 2 is reduced in discharge resistance as compared to the lithium secondary battery of Comparative Example 1.

### Experimental Example 3: Measurement of activation time

In the process of manufacturing the lithium secondary batteries of Examples 1~4 and Comparative Examples 1-2, the time required to activate the preliminary cells of Examples 1 to 4 and Comparative Examples 1 to 2 was measured. The results are shown in Table 4 below.

**[Table 4]**

| | Activation time [min] |
|---|---|
| Example 1 | 222 |
| Example 2 | 192 |
| Example 3 | 286 |
| Example 4 | 227 |
| Comparative Example 1 | 247 |
| Comparative Example 2 | 315 |

Referring to Table 4, it can be confirmed that the lithium secondary batteries of Examples 1 and 2 are reduced in activation time as compared to the lithium secondary battery of Comparative Example 1, and similarly, the lithium secondary batteries of Examples 3 and 4 are reduced in activation time as compared to the lithium secondary battery of Comparative Example 2. Through this, it can be understood that the lithium secondary batteries of Examples 1~2 and 3~4 can improve the processability of the lithium secondary battery manufacturing process as compared to the lithium secondary batteries of Comparative Examples 1 and 2, respectively.

## Claims

1. A manufacturing method of a lithium secondary battery comprising:
a step (S1) of manufacturing a preliminary cell which comprises a positive electrode containing a positive electrode active material, a negative electrode, a separator and an electrolyte; and
a step (S2) of charging the preliminary cell to a charging cut-off voltage and discharging it to the discharging cut-off voltage to activate the preliminary cell,
wherein the positive electrode active material includes a lithium-rich manganese-based oxide containing 50 mol% or more of manganese(Mn) among all metals excluding lithium, and having a molar ratio of lithium to all metals excluding lithium (Li/Me) exceeding 1, and
wherein the charging cut-off voltage is more than 4.3V, and the discharging cut-off voltage is 2.6V or more.

2. The manufacturing method of a lithium secondary battery according to claim 1, wherein the discharging cut-off voltage is 2.7V or more and 3.5V or less.

3. The manufacturing method of a lithium secondary battery according to claim 1, wherein in the activating step, the discharging is performed at a C-rate of 0.4C to 1.5C.

4. The manufacturing method of a lithium secondary battery according to claim 1, wherein the charging cut-off voltage is more than 4.3V and 4.65V or less.

5. The manufacturing method of a lithium secondary battery according to claim 1, wherein in the activating step, the charging includes a 1st charging performed at a C-rate of 0.04C to 0.5C and a 2nd charging performed at a C-rate of 0.3C to 1.2C.

6. The manufacturing method of a lithium secondary battery according to claim 5, wherein the 2nd charging includes a 2-1 charging performed at a C-rate of 0.8C to 1.2C and a 2-2 charging performed at a C-rate of 0.3C to 0.6C.

7. The manufacturing method of a lithium secondary battery according to claim 6, wherein the 2-1 charging is performed after the 1st charging until the SOC of the preliminary cell becomes between 40 and 80, and the 2-2 charging is performed after the 2-1 charging until the SOC of the preliminary cell becomes between 80 and 100.

8. The manufacturing method of a lithium secondary battery according to claim 5, wherein the 1st charging is performed in a constant-current mode (CC mode).

9. The manufacturing method of a lithium secondary battery according to claim 5, wherein the 2nd charging is performed in a constant current-constant voltage mode (CC-CV mode), and
the 2nd charging is performed up to a charging cut-off current of 0.02C to 0.25C.

10. The manufacturing method of a lithium secondary battery according to claim 1, wherein the lithium-rich manganese-based oxide is represented by the following Chemical Formula 1.
[Chemical Formula 1] Liₓ₁Mn_{y1}M¹_{1-y1}O₂
wherein in Chemical Formula 1,
1<x1≤1.5, 0.5≤y1≤1, and
the M¹ is at least one element selected from the group consisting of Ni, Al, B, Co, W, Mg, V, Ti, Zn, Ga, In, Ru, Nb, Sn, Sr and Zr.

11. The manufacturing method of a lithium secondary battery according to claim 1, wherein an average particle size(D₅₀) of the positive electrode active material is 1.5µm to 13µm.

12. The manufacturing method of a lithium secondary battery according to claim 1, wherein the positive electrode active material includes a first positive electrode active material and a second positive electrode active material having different average particle size(D₅₀), and
the average particle size of the first positive electrode active material has a larger value than the average particle size of the second positive electrode active material.

13. The manufacturing method of a lithium secondary battery according to claim 12, wherein the average particle size(D₅₀) of the first positive electrode active material is 6µm to 15µm, and
the average particle size(D₅₀) of the second positive electrode active material is 0.5µm to 6µm.

14. The manufacturing method of a lithium secondary battery according to claim 1, wherein the positive electrode active material has a BET specific surface area of 0.9 m²/g to 5.0 m²/g.
